# FASCICULE DE BREVET EUROPEEN

(11) **EP 3 972 809 B1**
(45) Date de publication et mention de la délivrance du brevet: **06.11.2024**
(21) Numéro de dépôt: 20726826.9
(22) Date de dépôt: 19.05.2020
(51) Int. Cl.: B29C 64/112, B29C 64/118, B29C 64/393, B33Y 10/00, B33Y 30/00, B29C 73/02

(54) **PROCÉDÉ DE RÉPARATION D'UNE PIÈCE EN COURS DE FABRICATION ADDITIVE**
VERFAHREN ZUM REPARIEREN EINES TEILS WÄHREND DER ADDITIVEN HERSTELLUNG
METHOD FOR REPAIRING A PART DURING ADDITIVE MANUFACTURING

(30) Priorité: 23.05.2019 FR 1905452
(43) Date de publication de la demande: 30.03.2022
(73) Titulaire: Institut de Recherche Technologique Jules Verne, 44340 Bouguenais (FR)
(72) Inventeur: EDY, François, 44400 REZE (FR)
(74) Mandataire: Cabinet Nony
(86) Numéro de dépôt international: PCT/EP2020/063993
(87) Numéro de publication internationale: WO 2020/234310

(56) Documents cités:
- EP-A1- 3 459 716
- WO-A1-2018/204981
- DE-T5- 112015 004 212
- US-A1- 2004 173 946
- US-A1- 2016 129 633
- US-A1- 2017 298 580
- US-A1- 2018 126 487

## Description

La présente invention concerne un procédé de réparation d'une pièce en cours de fabrication additive en couche par couche.

### Domaine technique

Dans le domaine de la fabrication additive, en particulier mais non exclusivement de l'extrusion de filament fondu encore appelée FDM pour Fused Déposition Modeling en anglais, les pièces produites en couche par couche peuvent présenter des défauts générés par exemple lors du procédé.

Les procédés de fabrication additive sont généralement longs et la pièce réalisée peut s'avérer, lors du contrôle final, défectueuse et donc mise au rebut. La matière utilisée est alors perdue alors qu'elle est généralement coûteuse. De plus, le temps de procédé utilisé pour la réalisation de la pièce est perdu. Il peut ainsi être avantageux d'effectuer un contrôle de la pièce au fur et à mesure de sa fabrication.

On connaît de US 2019/0009472 un procédé de contrôle d'une pièce imprimée en 3D avec une imprimante 3D.

US 2016/129633 concerne un appareil et un procédé d'impression 3D empilant une pluralité de couches. Un module d'impression pulvérise un matériau sous forme liquide sur une plateforme. Un module de durcissement permet de durcir le matériau liquide présent sur la plateforme pour former une couche. Un module de détection est configuré pour détecter le profil de la surface de la couche formée. Un module de commande reçoit le signal du profil et pilote le module d'impression et le module de durcissement en fonction du profil détecté pour corriger la surface de la couche formée.

US2017298580 fournit un traitement mobile et automatisé utilisant la fabrication additive. EP3459716 décrit une méthode et un système de surveillance en ligne d'une impression tridimensionnelle.

Il existe un besoin d'améliorer les procédés de fabrication additive existants.

### Exposé de l'invention

La présente invention a ainsi pour objet, selon un premier de ses aspects, un procédé de réparation d'une pièce en cours de fabrication additive en couche par couche avec une machine de fabrication additive, comportant les étapes suivantes :
a) déposer au moins une couche de matière sur un support pour la fabrication de la pièce,
b) détecter au moins un défaut de manque de matière, si un ou plusieurs défauts de ce type sont présents sur ladite au moins une couche,
c) réparer ledit au moins un défaut de manque de matière par ajout de matière,
d) renouveler les étapes a), b) et éventuellement c) jusqu'à réalisation de la pièce.

Grâce à l'invention, on dispose d'un procédé de fabrication additive qui permet de réparer, en cours de fabrication additive, les éventuels défauts de manque de matière détectés. On peut suivre les défauts de manque de matière de la pièce et réparer le ou les défauts de manque de matière par ajout de matière, en cours de fabrication de la pièce, à l'endroit opportun.

De préférence, une seule couche de matière est déposée à l'étape a) et l'étape b) est mise en oeuvre pour cette couche après son dépôt. Ainsi, on peut surveiller au fur et à mesure de la construction de la pièce les défauts de manque de matière, en couche par couche.

En variante, on dépose plusieurs couches de matière à l'étape a) avant de mettre en oeuvre l'étape b).

Dans une autre variante, les étapes a) et b) sont imbriquées, la détection étant effectuée au fur et à mesure du dépôt de matière pour former une couche.

De même, l'étape c) de réparation peut être effectuée après réalisation de chaque couche. En variante, elle est effectuée après réalisation de plusieurs couches.

L'étape a) de dépôt de ladite au moins une couche de matière est par exemple effectuée à l'aide d'une buse fixée à un chariot, notamment de la machine de fabrication additive, ledit chariot étant mobile selon au moins deux axes, de préférence trois axes orthogonaux, relativement au support.

La matière ajoutée à l'étape c) peut être différente de la matière déposée pour chaque couche à l'étape a), étant de préférence plus fluide. Elle est de préférence compatible. Elle peut être de même nature. En variante, la matière ajoutée à l'étape c) de réparation est identique à la matière déposée pour chaque couche à l'étape a).

L'étape c) de réparation dudit au moins un défaut de manque de matière peut être réalisée par la buse. En variante, l'étape c) de réparation dudit au moins un défaut de manque de matière est réalisée par une deuxième buse. Une telle deuxième buse est de préférence présente sur la machine de fabrication additive, de préférence à proximité de la buse, qui devient alors la buse principale.

Dans ce cas, la deuxième buse a de préférence un diamètre inférieur à celui de la buse, principale, notamment pour combler des zones de petites dimensions correspondant aux défauts de manque de matière.

La réparation d'un ou de plusieurs défauts de manque de matière peut consister à déposer de la matière dans la ou les zones où ledit ou lesdits défauts ont été détectés, en une quantité qui est déterminée pour combler ledit ou lesdits défauts. Dans ce cas, outre la détection dudit ou desdits défauts et une éventuelle acquisition de données topographiques relatives, le procédé peut comporter l'étape consistant à calculer la quantité de matière à déposer dans chaque zone donnée, identifiée, avec un défaut de manque de matière.

La réparation des défauts de manque de matière par ajout de matière, notamment à l'aide de la deuxième buse, peut être particulièrement avantageuse pour des pièces de grandes dimensions. En effet, pour fabriquer des pièces de grandes dimensions, on augmente généralement les dimensions du dépôt, en largeur et en hauteur. L'augmentation de la largeur peut faire que la trajectoire ne remplit pas correctement toutes les zones. Le fait de faire de l'ajout de matière dans les zones où il manque de la matière, par l'utilisation notamment d'une deuxième buse, permet de combler ces trous non souhaités.

L'étape b) de détection d'au moins un défaut de manque de matière comporte l' étape consistant à scanner ladite au moins une couche, déposée à l' étape a), pour acquérir des données topographiques sur ladite au moins une couche, et l'étape consistant à effectuer un traitement des données acquises pour détecter et géolocaliser au moins un défaut de manque de matière, si un ou plusieurs défauts de ce type sont présents sur ladite au moins une couche.

L'étape de scan est mise en oeuvre à l'aide d'un profilomètre, notamment un profilomètre laser.

La machine de fabrication additive comporte une enceinte, notamment fermée et éventuellement chauffée, le support de la pièce étant présent dans l'enceinte. La buse débouche avantageusement dans l'enceinte. Si présente, la deuxième buse débouche également avantageusement dans l'enceinte.

La machine de fabrication additive comporte une enceinte, le profilomètre, est disposé en dehors de l'enceinte et l'étape b) de scan peut être mise en oeuvre par le profilomètre au travers d'une portion de paroi transparente à la longueur d'onde du profilomètre, sur la gamme du visible, comprise entre 380 nm et 800 nm. La portion de paroi transparente forme au moins une partie d'une paroi définissant l'enceinte. La portion de paroi transparente peut constituer une paroi vitrée.

L'outil de scan est de préférence non intrusif, étant en dehors de la pièce.

L'outil de scan, notamment le profilomètre, est de préférence fixe relativement au chariot, étant notamment fixé à proximité de la buse. Le chariot peut former une partie d'une paroi définissant l'enceinte et/ou être monté sur une telle paroi.

Le chariot dont sont solidaires la buse et l'outil de scan, notamment le profilomètre, peut être mobile ou être fixe. Dans ce dernier cas, le support pour la fabrication de la pièce est avantageusement mobile selon au moins deux axes (X, Y), voire trois axes orthogonaux (X, Y, Z). Cette mobilité relative du chariot et/ou du support permet de déposer la matière à l'endroit prévu pour la construction de chaque couche de la pièce.

Le procédé de fabrication additive, encore appelé fabrication par synthèse additive, peut être un procédé d'impression par extrusion de matière, encore appelée « material extrusion » en anglais dont font notamment partie les technologies Fused déposition Modeling (FDM) ou Fused Filament Fabrication (FFF), une impression 3D par projection de liant encore appelée « binder jetting » en anglais dont fait notamment partie la technologie Drop-On-Demand (DOD), une impression 3D par fusion de lit de poudre encore appelée « powder bed fusion » en anglais dont font notamment partie les technologies de frittage sélectif laser (SLS) et de fusion sélective (SLM), une impression 3D par projection de matière « material jetting », une impression 3d par dépôt à énergie dirigée encore appelée « Directed Energy Déposition » en anglais, une impression 3d par photopolymérisation en cuve encore appelée «Vat Photopolymerization» en anglais dont fait notamment partie la technologie de stéréolithographie (SLA). Le procédé peut également être un mélange de ces différentes technologies tel que la technologie Multi Jet Fusion (MJF) qui combine la projection de liant et la fusion de lit de poudre. La méthode de fabrication additive de la pièce est de préférence le FDM ou FFF.

La matière utilisée pour la fabrication additive et/ou la matière ajoutée à l'étape c) de réparation est de préférence un polymère, notamment thermoplastique choisi par exemple dans le groupe constitué par les PAEK (Polyaryléthercétone) dont font partie le PEEK (polyétheréthercétone) et le PEKK (polyéthercétonecétone), les PEI (Polyétherimide également connu sous le nom d'ULTEM), le PPS (Polysulfure de phénylène), l'ABS (acrylonitrile butadiène styrène), le PA (polyamide), le PP (polypropylène), le PLA (acide polylactique), le TPU (polyuréthane thermoplastique) et le PET (polyéthylène).

Le polymère peut être amorphe et/ou semi-cristallin, chargé ou non.

Le polymère peut être chargé de fibres, notamment de fibres de carbone/de verre, de charge minérale, métallique ou végétale, notamment de billes de verre, de bois, ou être non chargé.

On peut établir des paires de matières, notamment compatibles entre elles, pouvant être utilisées, l'une des matières pouvant être déposée à l'étape a) et l'autre des matières pouvant être déposée à l'étape c) de réparation d'un ou plusieurs défauts de manque de matière.

Ainsi, dans le cas des matériaux de la famille des PEKK, dans un exemple, la buse extrude et dépose un fil en polymère de type PEKK 6003, tandis que, pour la réparation à l'étape c), la deuxième buse extrude et dépose un polymère de type PEKK 6004 plus fluide. Dans un autre exemple, la buse extrude et dépose un fil en polymère chargé de fibres de carbone de type PEKK 6004 CF, tandis que, pour la réparation à l'étape c), la deuxième buse extrude et dépose un polymère non chargé de type PEKK 6004. En variante, le même matériau, par exemple le PEKK 6004 CF, peut être déposé par l'une et l'autre des buses ou par la buse.

L'étape a) est de préférence réalisée par dépôt de fil polymère extrudé. L'étape c) est de préférence réalisée par dépôt de fil polymère extrudé.

Le procédé peut comporter une étape préalable à la première mise en oeuvre de l'étape a), consistant à scanner le support destiné à recevoir la pièce au cours de sa fabrication, avant dépôt de la première couche de la pièce. Cela permet de prendre un repère pour la fabrication ultérieure de la pièce.

L'étape b) de détection d'au moins un défaut de manque de matière peut permettre, notamment par scan, d'acquérir des données qui peuvent comprendre les coordonnées tridimensionnelles de la couche déposée et scannée.

Le traitement de données acquises, notamment par scan, peut comporter, à partir des données acquises, l'analyse d'au moins une grandeur globale afin de surveiller la fabrication additive, couche par couche. La grandeur globale est de préférence choisie parmi une épaisseur de la couche déposée, un écart type de l'épaisseur de la couche déposée, une quantité de matière déposée pour la couche, un déplacement du chariot à chaque couche déposée, la largeur moyenne des cordons de fil déposé et son écart-type lorsque la fabrication additive est réalisée par dépôt de fil polymère extrudé, la rugosité moyenne, notamment avec le paramètre Ra (hauteur moyenne arithmétique d'une ligne) ou Sa (hauteur moyenne arithmétique d'une surface) et les dimensions géométriques de la couche déposée.

Les données acquises, notamment par scan, peuvent permettre d'identifier des zones de manque de matière, de contrôler la géométrie du dépôt de matière à chaque couche, de contrôler une rugosité entre les couches, de connaître le taux de vide au sein d'une couche, de plusieurs couches ou de la pièce.

Le procédé peut comporter une étape préalable de paramétrage de la machine de fabrication additive pour la réalisation de l'étape a) avec des paramètres de consigne et sur la base de données géométriques de référence de la pièce et/ou de chaque couche de la pièce, stockées dans une mémoire.

Dans ce cas, le traitement des données acquises, notamment par scan, comporte avantageusement une comparaison des données acquises avec les paramètres de consigne et une détection d'éventuels écarts entre les données acquises et les paramètres de consigne.

Toujours dans ce cas, le traitement des données peut comporter une comparaison des données acquises, notamment par scan, avec les données géométriques mémorisées de référence, afin de détecter un écart moyen du contour de la pièce par rapport aux données géométriques de référence, et/ou un écart moyen par rapport aux trajectoires de dépôt de la matière constituant la pièce.

En effet, les données acquises peuvent permettre de reconnaître les contours de la couche, des couches ou de la pièce fabriquée et ainsi de reconstruire la pièce réellement fabriquée, couche par couche, et la comparer aux données initiales de référence. Cela peut permettre d'effectuer un contrôle qualité et d'accepter ou non la pièce d'un point de vue dimensionnel ou de permettre la mise en oeuvre de l'étape c) de réparation.

Les trajectoires de dépôt de la matière constituant la pièce peuvent correspondre, lorsque la fabrication additive est un dépôt de fil polymère extrudé, aux trajectoires de la buse, qui est par exemple pilotée par programmation de commande numérique.

Le traitement des données acquises, notamment par scan, peut comporter la détermination de la dimension surfacique et de la profondeur de chaque défaut de manque de matière. Lorsque la dimension surfacique et la profondeur d'un défaut de manque de matière sont respectivement supérieures à des valeurs seuils prédéterminées de dimension surfacique et de profondeur, on peut procéder à l'enregistrement des données sur ce défaut, ces données comportant notamment les coordonnées, la dimension surfacique et la profondeur du défaut.

La valeur seuil prédéterminée de dimension surfacique est par exemple de 5µm * 5µm, voire supérieure à 5µm * 5µm, par exemple égale à 50µm * 50µm. La valeur seuil prédéterminée de profondeur peut être de 10µm, voire supérieure à 10µm, par exemple égale à 100µm.

Si on détermine, par traitement de données, que la réparation est non souhaitable ou impossible, par exemple de par la présence d'un nombre de défauts supérieur à une valeur seuil prédéterminée et/ou de par la présence d'au moins un défaut de dimensions supérieures à une valeur seuil prédéterminée, le procédé peut comporter la mise au rebut de la pièce, même non terminée, les valeurs seuils étant prédéterminées pour une pièce donnée.

Cela permet d'économiser du temps de procédé et de la matière qui serait sinon utilisée pour terminer la pièce. En effet, la mise en oeuvre du procédé est relativement longue, pouvant être de plusieurs heures, et la matière, notamment polymère, utilisée est relativement chère. Le gain réalisé, dès lors qu'une pièce présente un défaut majeur ou un ensemble de défauts la rendant non conforme au niveau de qualité attendu, peut être ainsi substantiel si on peut la mettre au rebut dès détermination de sa non-conformité, en cours de fabrication.

Après qu'une réparation a été faite, le procédé peut comporter l'étape consistant à effectuer un scan de la couche réparée. Cela permet de vérifier que le ou les défauts de manque de matière sont réparés de manière satisfaisante. Si ce n'est pas le cas, une nouvelle étape c) de réparation peut être effectuée en fonction des données acquises et analysées. Si la réparation est jugée satisfaisante, une nouvelle couche peut être déposée dans une nouvelle étape a).

### Machine de fabrication additive

L'invention a encore pour objet, selon un autre de ses aspects, en combinaison avec ce qui précède, une machine de fabrication additive pour la mise en oeuvre du procédé tel que défini plus haut, la fabrication additive étant de préférence une impression par extrusion de matière (FDM, FFF), la machine comportant :
- un support pour la pièce à fabriquer,
- au moins une bobine de fil en matière polymère,
- au moins une buse pour l'extrusion et le dépôt du fil afin de former la pièce,
- un chariot sur lequel est fixée la buse et éventuellement une deuxième buse,
- au moins l'un du chariot et du support étant mobile selon au moins deux axes, notamment trois axes, relativement à l'autre,
   ladite au moins une buse étant utilisée pour la réparation de défaut de manque de matière ou la machine comportant une deuxième buse pour la réparation de défaut de manque de matière, la deuxième buse ayant de préférence un diamètre inférieur à celui de la buse.

La machine de fabrication additive comporte de préférence un outil de scan choisi dans le groupe constitué par un profilomètre, notamment un profilomètre optique, caméra ou laser, de préférence un profilomètre laser, un capteur de distance, une caméra, un profilomètre mécanique et un scanner 3D, de préférence par projection de lumière structurée, de préférence un profilomètre, apte à scanner la pièce.

La machine de fabrication additive comporte une enceinte, notamment fermée. Dans ce cas, le support est dans l'enceinte, et le profilomètre, est hors de l'enceinte, la buse, et l'éventuelle deuxième buse, débouchant dans l'enceinte. Le chariot peut former tout ou partie d'une paroi de l'enceinte, et/ou être solidaire d'une telle paroi.

L'enceinte peut être chauffée ou non et sa température de chauffage, le cas échéant peut varier, en fonction des matières utilisées pour la fabrication additive (ou matériaux). Pour certaines matières, il est préférable qu'elle soit chauffée. Cependant, certaines matières ne nécessitent pas d'enceinte chauffée.

La température de chauffage de l'enceinte est par exemple définie en fonction de la T_{g} (température de transition vitreuse) de la matière utilisée pour la fabrication additive. Par exemple, pour l'ABS, on peut chauffer l'enceinte à une température comprise entre 50°C et 100°C. Pour du PEKK, la température de l'enceinte sera égale à 150°C environ.

La température de chauffage de l'enceinte peut aller jusqu'à 250°C.

L'enceinte peut notamment être chauffée pour éviter les déformations engendrées par des gradients trop importants de température dans la pièce au cours de sa fabrication.

La machine de fabrication additive comporte une paroi, formant e partie d'une paroi de l'enceinte, transparente à la longueur d'onde du profilomètre, disposée de manière à permettre le scan par le profilomètre d'au moins une partie de la pièce au travers de cette paroi.

### Brève description des dessins

L'invention pourra être mieux comprise à la lecture de la description détaillée qui va suivre, d'exemples de mise en oeuvre non limitatifs de celle-ci, et à l'examen du dessin annexé, sur lequel :
[Fig 1] la figure 1 représente schématiquement un exemple de machine de fabrication additive selon l'invention,
[Fig 2] la figure 2 représente en schéma bloc les étapes d'une mise en oeuvre particulière du procédé de fabrication additive,
[Fig 3] la figure 3 est une vue schématique d'un exemple de pièce réalisée avec le procédé de fabrication additive décrit en regard de la figure 2,
[Fig 4] la figure 4 est un graphe de données issues de l'étape de scan dans la mise en oeuvre du procédé pour plusieurs pièces selon la figure 3,
[Fig 5] la figure 5 est un graphe de données issues de l'étape de scan dans la mise en oeuvre du procédé pour plusieurs pièces selon la figure 3,
[Fig 6] la figure 6 est un graphe de données issues de l'étape de scan dans la mise en oeuvre du procédé pour plusieurs pièces selon la figure 3,
[Fig 7] la figure 7 est un graphe de données issues de l'étape de scan dans la mise en oeuvre du procédé pour plusieurs pièces selon la figure 3,
[Fig 8] la figure 8 comporte plusieurs images schématiques résultant du traitement de données issues de l'étape de scan, pour différentes couches de la pièce de la figure 3, au cours de la mise en oeuvre du procédé selon l'invention,
[Fig 9] la figure 9 est une photographie agrandie illustrant une portion de la pièce de la figure 3,
[Fig 10] la figure 10 représente en schéma bloc les étapes d'un exemple de mise en oeuvre du procédé de réparation de pièce en cours de fabrication additive selon l'invention, et
[Fig 11] la figure 11 représente schématiquement un exemple de machine de fabrication additive selon l'invention pour la mise en oeuvre du procédé illustré sur la figure 10, et
[Fig 12] la figure 12 représente schématiquement le résultat du scan d'un exemple de pièce à réparer à l'aide du procédé selon l'invention.

### Description détaillée

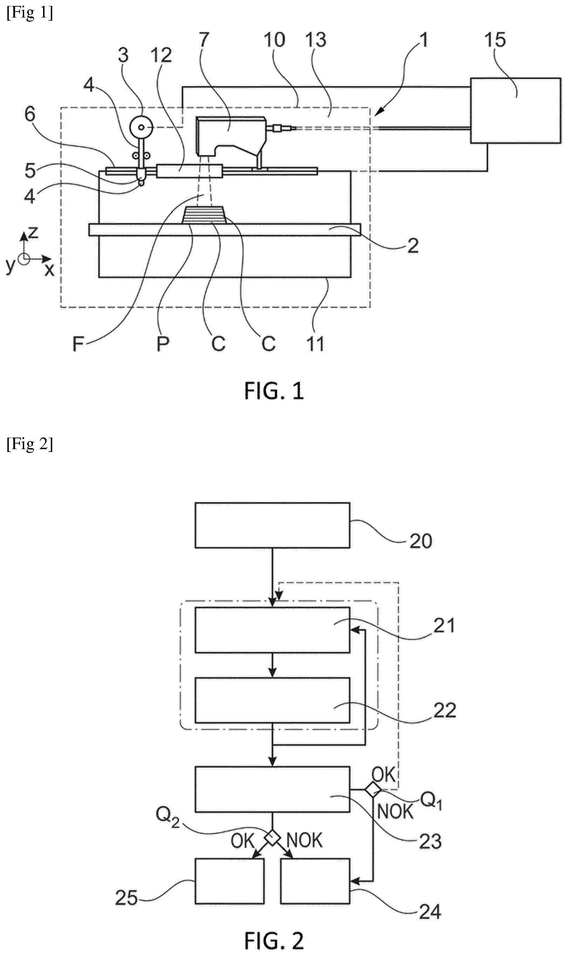

On a illustré à la figure 1 une machine 1 de fabrication additive pour réaliser une pièce P en couche par couche et permettre la réparation d'éventuels défauts de manque de matière. Dans l'exemple illustré, la technique de fabrication additive est un procédé d'impression par dépôt de filament fondu, technologie appelée FDM, ou encore FFF.

La machine 1 comporte une armoire 10 représentée en pointillés sur cette figure. La machine 1 comporte, logés dans l'armoire 10, un support 2 pour la pièce P à fabriquer, au moins une bobine 3 de fil 4 en matière polymère, une buse 5 pour l'extrusion et le dépôt du fil 4 afin de former la pièce P, un chariot 6 sur lequel est fixée la buse 5.

Au moins l'un du chariot 6 et du support 2 est mobile selon au moins deux axes X, Y, dans cet exemple selon trois axes X, Y et Z, relativement à l'autre. Dans l'exemple illustré, le chariot 6 est mobile relativement au support 2, mais on ne sort pas du cadre de l'invention si c'est le support 2 qui est mobile et le chariot 6 qui est fixe, ou si tous deux, chariot 6 et support 2, sont mobiles l'un relativement à l'autre.

La machine 1 comporte encore un outil de scan consistant selon l'invention en un profilomètre 7, dans cet exemple laser, notamment de classe 2, fixe relativement au chariot 6. Le profilomètre 7 permet de scanner la pièce P et d'acquérir des données topographiques de la pièce P, en couche par couche par exemple. Le profilomètre choisi dans cet exemple a une zone d'observation de 39mm de large, pour obtenir une résolution de 0,05 mm. On peut changer la tête de mesure du profilomètre pour agrandir la largeur scannée, ce qui va dans le sens d'une baisse de résolution, ou pour la diminuer, afin d'augmenter la résolution. Pour scanner une pièce dont les dimensions sont plus grandes que la largeur mesurée, on effectue plusieurs passes.

La machine 1 comprend, dans l'armoire 10, une enceinte 11, fermée. Dans cet exemple, l'enceinte 11 est chauffée, à une température d'environ 150°C, pour une matière utilisée pour la fabrication additive consistant en du PEKK. L'enceinte 11 contient le support 2 qui porte la pièce P, ici représentée avec plusieurs couches C déposées. Le profilomètre 7 est situé en dehors de l'enceinte 11, dans un espace 13 de la machine 1 qui est régulé en température. La machine 1 comporte une portion de paroi 12 transparente à la longueur d'onde du profilomètre 7, disposée de manière à permettre le scan par le profilomètre 7 d'au moins une partie de la pièce P au travers de cette portion de paroi 12. La portion de paroi 12 peut être solidaire du chariot 6 sur lequel sont fixés la buse 5 et le profilomètre 7. La buse 5 débouche dans l'enceinte 11 pour le dépôt de matière afin de fabriquer la pièce en couche par couche.

La machine 1 comporte encore un système informatique 15 relié au moins au profilomètre 7 afin de recueillir des données de sa part, à la bobine 3 pour commander le dépôt de matière et au chariot 6 de manière à commander le déplacement en X, Y et Z de celui-ci. En variante, le système informatique 15 relié au profilomètre 7 n'est pas le même que celui qui pilote la machine 1, mais ces deux systèmes informatiques peuvent communiquer entre eux lorsque nécessaire, par exemple en cas d'arrêt machine.

La machine 1 de fabrication additive peut être utilisée pour mettre en oeuvre le procédé de fabrication additive qui va être décrit en référence à la figure 2 qui en illustre les étapes.

Le procédé de fabrication additive de la pièce P comporte une première étape 20 comportant le scan, à l'aide du profilomètre 7, du support 2, avant dépôt de la première couche C de la pièce P. On effectue cette mesure pour obtenir une distance de référence entre le profilomètre et le support, c'est une étape d'étalonnage. Cette acquisition de données relative au support 2 peut être omise dans une variante de mise en oeuvre de l'invention.

On réalise ensuite une première couche de la pièce P, par dépôt d'un fil extrudé de matière polymère à l'aide de la buse 5, dans une étape 21. On déplace le chariot 6 relativement au support 2 pour effectuer le dépôt de matière à l'endroit souhaité.

Dans une étape 22, on scanne la première couche C de la pièce P qui a été déposée à l'étape 21, à l'aide du profilomètre 7, au travers de la paroi 12 transparente. Le faisceau F est visible sur la figure 1. On peut déplacer le chariot 6 relativement au support 2 pour effectuer le scan.

Dans une étape 23, on effectue un traitement des données acquises pour détecter et géolocaliser au moins un défaut de manque de matière, si un ou plusieurs défauts de ce type sont présents, notamment sur la première couche C déposée à l'étape 21.

Comme illustré, on peut réaliser plusieurs fois les étapes 21 et 22 avant de mettre en oeuvre l'étape 23. On peut, de manière additionnelle ou en variante, comme illustré, renouveler les étapes 21 et 22 après mise en oeuvre de l'étape 23 jusqu'à réalisation de toutes les couches de la pièce P.

Dans une variante, l'étape 21 consiste à déposer non pas une mais plusieurs couches C avant d'effectuer l'étape 22 de scan. Dans une autre variante, le scan de l'étape 22 est effectué dès que la matière est déposée, avant réalisation de la couche C en entier, au fur et à mesure du dépôt de celle-ci.

Le scan effectué à l'étape 22 permet d'acquérir des données topographiques de la couche C déposée. On peut obtenir les coordonnées en X, Y et Z de la couche C supérieure de la pièce en cours de fabrication, couche qui vient d'être déposée, par exemple.

L'étape 23 de traitement des données comporte notamment, à partir des données acquises, l'analyse d'une ou plusieurs grandeurs globales afin de surveiller le procédé de fabrication additive, couche par couche. Parmi les grandeurs globales analysées, on peut citer une épaisseur de la couche C déposée, un écart type de l'épaisseur de la couche C déposée, une quantité de matière déposée pour la couche C et un déplacement du chariot 6 et/ou du support à chaque couche C déposée, une rugosité moyenne, une largeur moyenne des cordons de fil déposé.

Au cours de l'étape 20, dans l'exemple illustré, on effectue également le paramétrage de la machine 1 de fabrication additive pour la réalisation de l'étape 21 avec des paramètres de consigne et sur la base de données géométriques de référence de la pièce P et/ou de chaque couche C de la pièce P, stockées dans une mémoire du système informatique 15.

L'étape 23 de traitement comporte une comparaison des données acquises à l'étape 22 avec les paramètres de consigne et une détection d'éventuels écarts entre les données acquises et les paramètres de consigne.

L'étape 23 de traitement comporte encore une comparaison des données acquises à l'étape 22 avec les données géométriques mémorisées de référence, afin de détecter un écart moyen du contour de la pièce P par rapport aux données géométriques de référence et/ou un écart moyen par rapport aux trajectoires de dépôt de matière constituant la pièce P, programmée en amont de la fabrication. L'étape 23 comporte également la détermination de la dimension surfacique et de la profondeur de chaque défaut de manque de matière détecté et, lorsque la dimension surfacique et la profondeur d'un défaut de manque de matière sont respectivement supérieures à des valeurs seuils prédéterminées de dimension surfacique et de profondeur, l'enregistrement des données sur ce défaut, ces données comportant notamment les coordonnées, la dimension surfacique et la profondeur du défaut.

La valeur seuil prédéterminée de dimension surfacique est dans l'exemple illustré de 50µm * 50µm et la valeur seuil prédéterminée de profondeur est de 100µm.

Après mise en oeuvre d'une étape 23 de traitement des données, on répond à une question Q1 sur la présence d'un nombre de défauts supérieur à une valeur seuil prédéterminée et/ou la présence d'au moins un défaut de dimensions supérieures à une valeur seuil prédéterminée, les valeurs seuils étant prédéterminées pour une pièce P donnée. Si la réponse à la question Q1 est qu'il existe un nombre de défauts supérieur à la valeur seuil prédéterminée et/ou la présence d'au moins un défaut de dimensions supérieures à la valeur seuil prédéterminée, NOK sur le schéma de la figure 2, alors le procédé conduit à l'étape 24 de mise au rebut de la pièce P, non terminée. Sinon, OK sur le schéma de la figure 2, la pièce P est terminée, en recommençant les étapes 21 et 22.

A la fin de la réalisation de la pièce P, une question Q2 similaire à la question Q1 est posée. Si la réponse à la question Q2 est qu'il existe un nombre de défauts supérieur à la valeur seuil prédéterminée et/ou la présence d'au moins un défaut de dimensions supérieures à la valeur seuil prédéterminée, NOK sur le schéma de la figure 2, alors le procédé conduit à l'étape 24 de mise au rebut de la pièce P, non terminée. Sinon, OK sur le schéma de la figure 2, la pièce P terminée est validée dans une étape 25.

Le contrôle effectué pendant la fabrication selon ce procédé est une forme de contrôle non destructif, encore appelé CND, mais qui a lieu tout au long de la fabrication contrairement au contrôle non destructif habituel qui se fait sur la pièce finie. Cette étape du contrôle non destructif habituel sur pièce finie n'est ainsi pas nécessaire, grâce à l'invention, ce qui permet d'une part d'économiser cette étape finale habituelle et d'autre part de ne pas avoir à investir dans le système de CND permettant de la mettre en oeuvre, système qui est généralement coûteux.

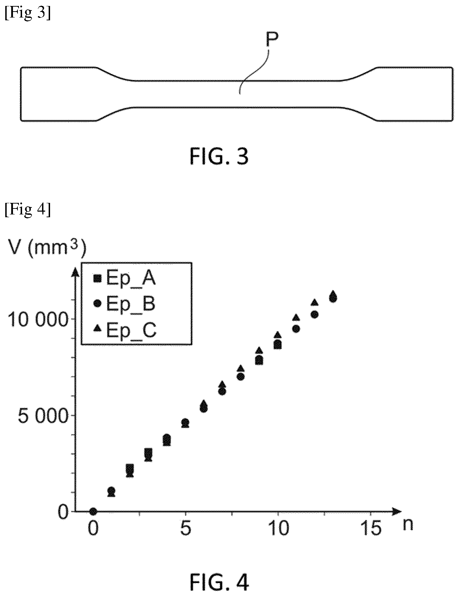

On a représenté sur la figure 3 une pièce P, consistant en une éprouvette de traction, réalisée à l'aide du procédé décrit en regard de la figure 2, mis en oeuvre par la machine 1 de fabrication additive.

Trois pièces P consistant en des éprouvettes de traction respectivement nommées Ep_A, Ep_B et Ep_C sur le modèle de la pièce P illustrée sur la figure 3 ont été réalisées avec la machine 1 et la mise en oeuvre du procédé de fabrication additive décrit plus haut, avec les mêmes paramètres et valeurs de consigne.

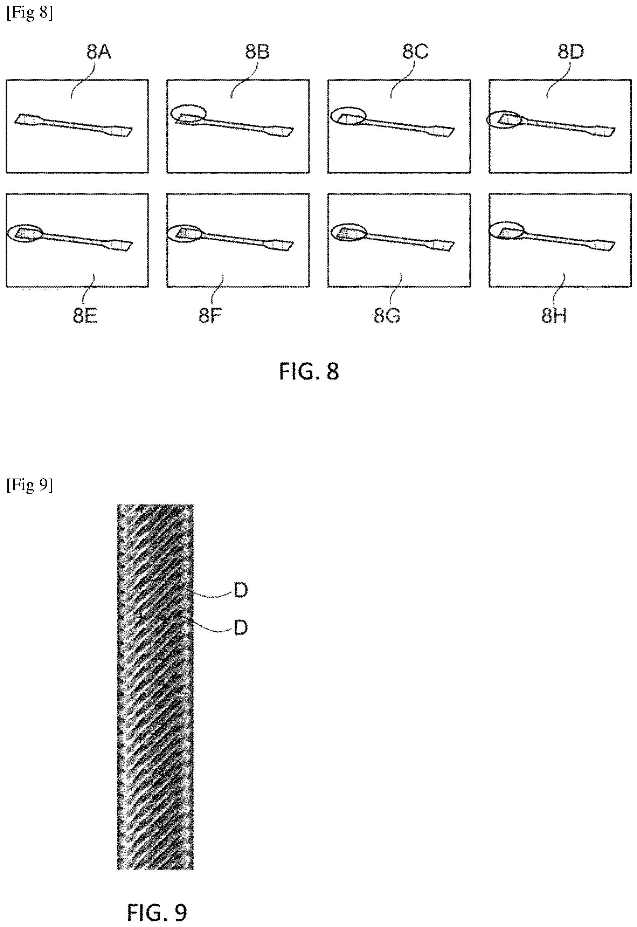

La figure 8 illustre plusieurs des couches C scannées de l'éprouvette Ep_C. L'image intitulée 8A illustre la deuxième couche déposée et scannée, l'image intitulée 8B représente la troisième couche, l'image 8C la quatrième couche, l'image 8D la cinquième couche, l'image 8E la sixième couche, l'image 8F la septième couche, l'image 8G la douzième couche et l'image 8H la treizième couche. On visualise sur les images 8B à 8H une zone entourée avec au moins un défaut visible de manque de matière.

Les figures 4 à 7 illustrent des graphes représentant au moins une partie du résultat de traitement de données acquises sur la pièce P au cours de sa fabrication, après dépôt de chaque couche C, par scan, pour chacune des éprouvettes Ep_A, Ep_B et Ep_C.

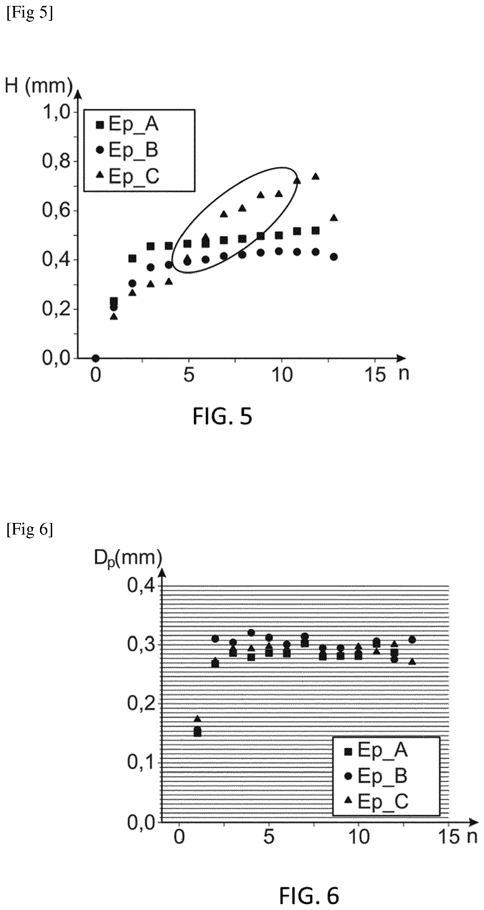

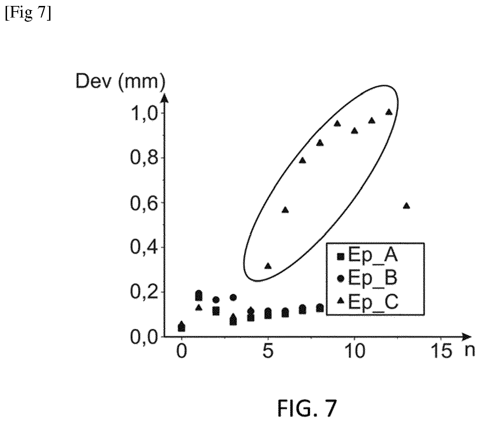

Le graphe de la figure 4 représente le volume V exprimé en mm³ en fonction du rang n de chaque couche C. Le graphe de la figure 5 illustre la hauteur H moyenne par couche, exprimée en mm, en fonction du rang n de chaque couche C. Le graphe de la figure 6 illustre le déplacement du chariot, Dp, exprimé en mm, en fonction du rang n de chaque couche C. Le graphe de la figure 7 représente l'écart-type de la hauteur de couche, Dev, exprimé en mm, en fonction du rang n de chaque couche C. Le rang n correspond au numéro de la couche C déposée. La première couche déposée a le rang 1, la deuxième couche, déposée sur la première couche, a le rang 2, etc, jusqu'au rang le plus élevé qui correspond à la dernière couche déposée pour la réalisation de la pièce P. Sur les graphes des figures 4 à 7, les valeurs illustrées pour l'éprouvette Ep_A sont des petits carrés, celles pour l'éprouvette Ep_B sont des petits ronds, et celles pour l'éprouvette Ep_C sont des petits triangles.

On visualise sur les figures 5 et 7 des valeurs aberrantes pour l'éprouvette Ep_C, entourées sur les graphes, ce qui montre un défaut de hauteur de couche et un écart type très important, également visible sur la figure 8, ainsi qu'indiqué ci-dessus.

Une portion de pièce P a été illustrée sur la figure 9 pour représenter la détection de défauts D, repérés par des petites croix sur cette figure, de manque de matière. Lorsque des défauts de type manque de matière sont localisés par scan et traitement des données de scan, on les compare à des valeurs seuils, par exemple de dimensions supérieures à 5µm * 5 µm et de profondeur supérieure à 10µm. Lorsqu'un défaut a une taille supérieure à au moins l'une des valeurs seuils, on enregistre ses coordonnées ainsi que sa taille (en surface) et sa profondeur. Cela peut permettre de prendre des décisions quant à la conservation et à la poursuite de fabrication de la pièce P ou à sa mise au rebut.

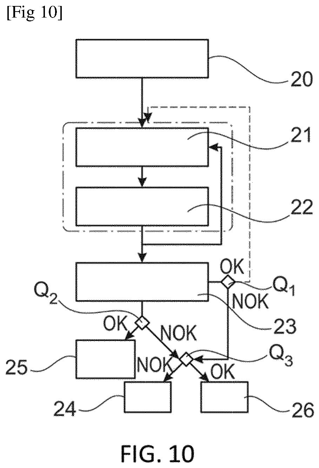

On a représenté sur la figure 10 un exemple de mise en oeuvre du procédé de réparation d'une pièce en cours de fabrication additive selon l'invention. Dans cet exemple, le procédé peut comporter les mêmes étapes que celles illustrées dans le procédé illustré sur la figure 2, mais comporte également, selon l'invention, une étape de réparation de défaut(s) de manque de matière comme cela va être expliqué ci-après.

En effet, comme illustré sur cette figure, lorsqu'à la question Q1 ou à la question Q2, la réponse est NOK, une question Q3 sur la possibilité de réparer le ou les défauts de manque de matière est posée. Si la réponse à cette question Q3 est oui, alors OK sur le schéma, la couche C concernée par le défaut et/ou la pièce P est réparée par ajout de matière dans une étape 26. En revanche, si la réponse à cette question Q3 est non, alors NOK sur le schéma, la pièce, terminée ou non, est mise au rebut.

Il est à noter qu'on peut classer dans la présente invention les données acquises par scan en deux catégories permettant deux types d'analyse. D'une part, les grandeurs globales par couche, mentionnées plus haut, peuvent être acquises et analysées, notamment comparées aux valeurs de référence et valeurs de consigne, pour surveiller le procédé de fabrication additive. D'autre part, les défauts de manque de matière, notamment ceux qui peuvent être corrigés, peuvent être détectés et géolocalisés pour être traités et réparés par ajout de matière.

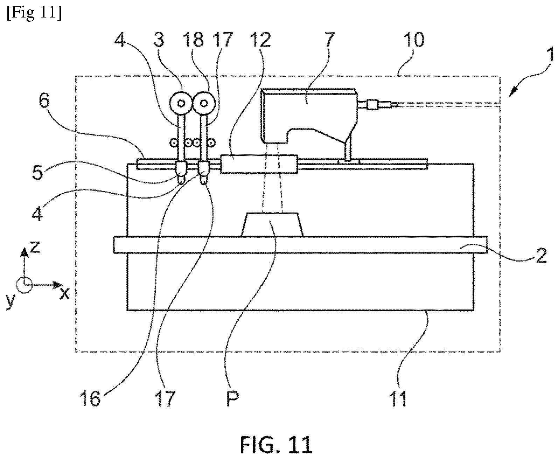

Pour la mise en oeuvre du procédé selon l'invention illustré sur la figure 10, on peut utiliser la machine 1 de fabrication additive illustrée sur la figure 11 qui comporte une deuxième buse 16 alimentée en un deuxième fil 17 en matière polymère par une deuxième bobine 18. Le deuxième fil 17 est réalisé, dans l'exemple illustré, dans une matière polymère plus fluide que le fil 4. La deuxième buse 16 a un plus petit diamètre que la buse 5. La deuxième buse 16 et le fil 17 sont utilisés pour la réparation des défauts de manque de matière.

Pour la mise en oeuvre du procédé selon l'invention illustré sur la figure 10, on peut également utiliser la machine 1 de fabrication additive illustrée sur la figure 2, la buse 5 et le fil 4 pouvant alors être utilisés pour la réparation des défauts de manque de matière.

On peut réparer, si besoin, le ou les défauts de manque de matière après réalisation d'une couche, ou de plusieurs couches, ou même en cours de réalisation d'une couche non entièrement déposée sur la précédente ou sur le support 2. Lorsqu'on effectue la réparation après réalisation d'une couche, on peut ensuite déposer une nouvelle couche pardessus, puis effectuer le scan, puis le traitement de données et une nouvelle éventuelle réparation, et ainsi de suite jusqu'à réalisation de la pièce.

Par ailleurs, lorsqu'un ou des défauts de manque de matière est/sont réparés, un scan peut être effectué pour vérifier la réparation. Si celle-ci est satisfaisante, la couche suivante peut être déposée. Si la réparation n'est pas satisfaisante, le ou les défauts peuvent être à nouveau réparés, avant de vérifier par scan et/ou de déposer une nouvelle couche.

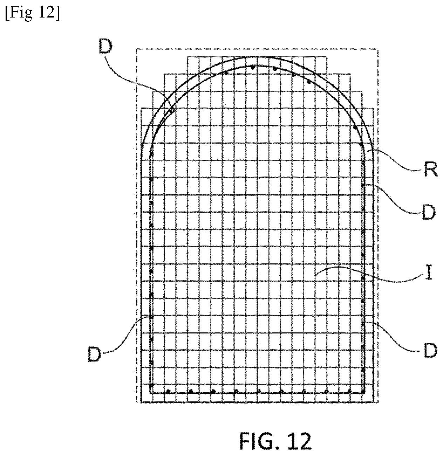

On a représenté sur la figure 12, schématiquement, une couche d'une pièce visualisée après son dépôt, le scan et le traitement des données. Le contour R de la pièce est visible. On visualise également le remplissage I de la couche qui est à l'intérieur du contour R et l'on détecte des zones avec défauts D de manque de matière entre le contour R et le remplissage I, à leur jonction. Il est à noter qu'un certain recouvrement entre les deux zones R et I peut permettre de combler une partie de ces défauts, mais, comme visible sur cette figure, certains défauts D de manque de matière subsistent et sont à réparer grâce à l'invention. On ne peut pas effectuer trop de recouvrement, lors du dépôt de matière, car cela peut causer une dégradation de la surface.

Un avantage de l'invention est qu'il permet de réparer une zone défectueuse par manque de matière en cours de fabrication de la pièce. Un autre avantage est que l'on peut réduire la porosité au niveau des zones de recouvrement entre le contour et le remplissage. Un avantage encore est de permettre de limiter le nombre de pièces mises au rebut car possédant trop de défauts de manque de matière ou un ou plusieurs défauts de manque de matière de trop grandes dimensions.

L'invention n'est pas limitée aux exemples qui viennent d'être décrits, mais est définie par l'objet des revendications.

En particulier le procédé de fabrication additive peut être autre que la technologie FDM.

En particulier, le procédé de fabrication additive peut consister en une impression 3D par projection de liant encore appelée « binder jetting » en anglais dont fait notamment partie la technologie Drop-On-Demand (DOD), une impression 3D par fusion de lit de poudre encore appelée « powder bed fusion » en anglais dont font notamment partie les technologies de frittage sélectif laser (SLS) et de fusion sélective (SLM), une impression 3D par projection de matière « material jetting », une impression 3d par dépôt à énergie dirigée encore appelée « Directed Energy Déposition » en anglais, une impression 3d par photopolymérisation en cuve encore appelée «Vat Photopolymerization» en anglais dont fait notamment partie la technologie de stéréolithographie (SLA). Le procédé peut également être un mélange de ces différentes technologies tel que la technologie Multi Jet Fusion (MJF) qui combine la projection de liant et la fusion de lit de poudre.

## Revendications

1. Procédé de réparation d'une pièce (P) en cours de fabrication additive en couche par couche avec une machine (1) de fabrication additive, la fabrication additive étant une impression par extrusion de matière, la machine (1) de fabrication additive comportant une enceinte (11), le procédé comportant les étapes suivantes :
a) déposer au moins une couche de matière sur un support (2) pour la fabrication de la pièce (P), le support (2) de la pièce étant présent dans l'enceinte (11),
b) détecter au moins un défaut de manque de matière, si un ou plusieurs défauts de ce type sont présents sur ladite au moins une couche,
c) réparer ledit au moins un défaut de manque de matière par ajout de matière,
d) renouveler les étapes a), b) et éventuellement c) jusqu'à réalisation de la pièce (P)
dans lequel l'étape b) de détection d'au moins un défaut de manque de matière comporte l'étape consistant à scanner ladite au moins une couche, déposée à l'étape a), pour acquérir des données topographiques sur ladite au moins une couche, et l'étape consistant à effectuer un traitement des données acquises pour détecter et géolocaliser au moins un défaut de manque de matière, si un ou plusieurs défauts de ce type sont présents sur ladite au moins une couche, l'étape de scan étant mise en oeuvre par un profilomètre, notamment un profilomètre laser, le profilomètre étant disposé en dehors de l'enceinte, l'étape b) de scan étant mise en oeuvre par le profilomètre au travers d'une portion de paroi transparente à la longueur d'onde du profilomètre, sur la gamme du visible, comprise entre 380 nm et 800 nm, la portion de paroi transparente étant au moins une partie d'une paroi définissant l'enceinte..

2. Procédé selon la revendication 1, dans lequel l'étape a) de dépôt de ladite au moins une couche de matière est effectuée à l'aide d'une buse (5) fixée à un chariot (6), ledit chariot (6) étant mobile selon au moins deux axes (X, Y), de préférence trois axes orthogonaux (X, Y, Z), relativement au support (2).

3. Procédé selon l'une des deux revendications immédiatement précédentes, dans lequel la matière ajoutée à l'étape c) est différente de la matière déposée pour chaque couche à l'étape a), étant de préférence plus fluide.

4. Procédé selon la revendication 2, dans lequel l'étape c) de réparation dudit au moins un défaut de manque de matière est réalisée par la buse (5).

5. Procédé selon la revendication 2, dans lequel l'étape c) de réparation dudit au moins un défaut de manque de matière est réalisée par une deuxième buse (16).

6. Procédé selon la revendication précédente, dans lequel la deuxième buse (16) a un diamètre inférieur à celui de la buse (5).

7. Procédé selon l'une quelconque des revendications précédentes, dans lequel la matière utilisée pour la fabrication additive et/ou la matière ajoutée à l'étape c) de réparation est un polymère thermoplastique choisi dans le groupe constitué par les PAEK (Polyaryléthercétone) dont font partie le PEEK (polyétheréthercétone) et le PEKK (polyéthercétonecétone), les PEI (Polyétherimide également connu sous le nom d'ULTEM), le PPS (Polysulfure de phénylène), l'ABS (acrylonitrile butadiène styrène), le PA (polyamide), le PP (polypropylène), le PLA (acide polylactique), le TPU (polyuréthane thermoplastique) et le PET (polyéthylène).

8. Procédé selon l'une quelconque des revendications précédentes, dans lequel l'étape a) est réalisée par dépôt de fil polymère extrudé.

9. Machine (1) de fabrication additive pour la mise en oeuvre du procédé selon l'une quelconque des revendications précédentes, la fabrication additive étant une impression par extrusion de matière, la machine comportant :
- un support (2) pour la pièce (P) à fabriquer,
- au moins une bobine (3) de fil (4) en matière polymère,
- au moins une buse (5) pour l'extrusion et le dépôt du fil (4) afin de former la pièce (P),
- un chariot (6) sur lequel est fixée la buse (5) et éventuellement une deuxième buse (16),
- au moins l'un du chariot (6) et du support (2) étant mobile selon au moins deux axes (X, Y), notamment trois axes (X, Y, Z), relativement à l'autre, ladite au moins une buse (5) étant utilisée pour la réparation de défaut de manque de matière ou la machine (1) comportant une deuxième buse (16) pour la réparation de défaut de manque de matière, la deuxième buse (16) ayant de préférence un diamètre inférieur à celui de la buse (5),
- un outil de scan, l'outil de scan étant un profilomètre, notamment un profilomètre optique,
- une enceinte (11), le support étant dans l'enceinte (11), l'outil de scan étant hors de l'enceinte (11), la buse (5), et l'éventuelle deuxième buse (16), débouchant dans l'enceinte (11), une partie d'une paroi de l'enceinte étant transparente à la longueur d'onde du profilomètre et est disposée de manière à permettre le scan par le profilomètre d'au moins une partie de la pièce au travers de cette paroi.

## Patentansprüche

1. Verfahren zum Reparieren eines Teils (P) während der schichtweisen generativen Fertigung mit einer Maschine (1) zur generativen Fertigung, wobei die generative Fertigung ein Drucken durch Extrusion von Material ist, wobei die Maschine (1) zur generativen Fertigung eine Kammer (11) umfasst, wobei das Verfahren die folgenden Schritte umfasst:
a) Ablegen mindestens einer Materialschicht auf einem Träger (2) zur Fertigung des Teils (P), wobei der Träger (2) des Teils in der Kammer (11) vorhanden ist,
b) Detektieren mindestens eines Materialmangel-Fehlers, wenn ein oder mehrere Fehler dieser Art in der mindestens einen Schicht vorhanden sind,
c) Reparieren des mindestens einen Materialmangel-Fehlers durch Zugeben von Material,
d) Wiederholen der Schritte a), b) und gegebenenfalls c) bis zur Herstellung des Teils (P)
wobei der Schritt b) des Detektierens mindestens eines Materialmangel-Fehlers den Schritt umfasst, der darin besteht, die mindestens eine Schicht, die im Schritt a) abgelegt wurde, zu scannen, um topografische Daten zu der mindestens einen Schicht zu erfassen, und den Schritt, der darin besteht, eine Verarbeitung der erfassten Daten durchzuführen, um mindestens einen Materialmangel-Fehler zu detektieren und zu geolokalisieren, wenn ein oder mehrere Fehler dieser Art in der mindestens einen Schicht vorhanden sind, wobei der Scan-Schritt von einem Profilometer, insbesondere einem Laserprofilometer, durchgeführt wird, wobei das Profilometer außerhalb der Kammer angeordnet ist, wobei der Scan-Schritt b) von dem Profilometer durch einen Wandabschnitt hindurch durchgeführt wird, der für die Wellenlänge des Profilometers im Bereich des sichtbaren Lichts, zwischen 380 nm und 800 nm, transparent ist, wobei der transparente Wandabschnitt mindestens ein Bereich einer die Kammer definierenden Wand ist.

2. Verfahren nach Anspruch 1, wobei der Schritt a) des Ablegens der mindestens einen Materialschicht mithilfe einer Düse (5) durchgeführt wird, die an einem Wagen (6) befestigt ist, wobei der Wagen (6) entlang von mindestens zwei Achsen (X, Y), bevorzugt drei orthogonalen Achsen (X, Y, Z), relativ zu dem Träger (2) beweglich ist.

3. Verfahren nach einem der beiden unmittelbar vorhergehenden Ansprüche, wobei das im Schritt c) zugegebene Material verschieden von dem für jede Schicht im Schritt a) abgelegten Material ist, wobei es bevorzugt flüssiger ist.

4. Verfahren nach Anspruch 2, wobei der Schritt c) des Reparierens des mindestens einen Materialmangel-Fehlers von der Düse (5) ausgeführt wird.

5. Verfahren nach Anspruch 2, wobei der Schritt c) des Reparierens des mindestens einen Materialmangel-Fehlers von einer zweiten Düse (16) ausgeführt wird.

6. Verfahren nach dem vorhergehenden Anspruch, wobei die zweite Düse (16) einen geringeren Durchmesser als die Düse (5) hat.

7. Verfahren nach einem der vorhergehenden Ansprüche, wobei das zur generativen Fertigung verwendete Material und/oder das im Schritt c) des Reparierens zugegebene Material ein thermoplastisches Polymer ist, das aus der Gruppe gewählt ist, die aus den PAEK (Polyaryletherketon), zu denen das PEEK (Polyetheretherketon) und das PEKK (Polyetherketonketon) gehören, den PEI (Polyetherimid, auch bekannt unter dem Namen ULTEM), dem PPS (Polyphenylensulfid), dem ABS (Acrylnitril-Butadien-Styrol), dem PA (Polyamid), dem PP (Polypropylen), dem PLA (Polymilchsäure), dem TPU (thermoplastisches Polyurethan) und dem PET (Polyethylen) besteht.

8. Verfahren nach einem der vorhergehenden Ansprüche, wobei der Schritt a) durch Ablegen eines extrudierten Polymerfilaments ausgeführt wird.

9. Maschine (1) zur generativen Fertigung zur Durchführung des Verfahrens nach einem der vorhergehenden Ansprüche, wobei die generative Fertigung ein Drucken durch Extrusion von Material ist, wobei die Maschine umfasst:
- einen Träger (2) für das zu fertigende Teil (P),
- mindestens eine Rolle (3) mit Filament (4) aus Polymermaterial,
- mindestens eine Düse (5) zum Extrudieren und Ablegen des Filaments (4), um das Teil (P) zu bilden,
- einen Wagen (6), an dem die Düse (5) und gegebenenfalls eine zweite Düse (16) befestigt ist,
- wobei von dem Wagen (6) und dem Träger (2) mindestens einer entlang von mindestens zwei Achsen (X, Y), insbesondere drei Achsen (X, Y, Z), relativ zu dem anderen beweglich ist, wobei die mindestens eine Düse (5) zum Reparieren eines Materialmangel-Fehlers verwendet wird oder wobei die Maschine (1) eine zweite Düse (16) zum Reparieren eines Materialmangel-Fehlers umfasst, wobei die zweite Düse (16) bevorzugt einen kleineren Durchmesser als die Düse (5) hat,
- ein Scan-Werkzeug, wobei das Scan-Werkzeug ein Profilometer ist, insbesondere ein optisches Profilometer,
- eine Kammer (11), wobei der Träger in der Kammer (11) ist, wobei das Scan-Werkzeug außerhalb der Kammer (11) ist, wobei die Düse (5)und gegebenenfalls die zweite Düse (16) in der Kammer (11) münden, wobei ein Bereich einer Wand der Kammer für die Wellenlänge des Profilometers transparent ist und so angeordnet ist, dass sie das Scannen durch das Profilometer mindestens eines Bereichs des Teils durch diese Wand hindurch ermöglicht.

## Claims

1. Method for repairing a part (P) during layer-by-layer additive manufacturing using an additive manufacturing machine (1), the additive manufacturing being material extrusion printing, the additive manufacturing machine (1) including an enclosure (11), the method including the following steps:
a) depositing at least one layer of material on a support (2) for manufacturing the part (P), the support (2) for the part being present in the enclosure (11),
b) detecting at least one missing material defect, if one or more defects of this type are present on said at least one layer,
c) repairing said at least one missing material defect by adding material,
d) repeating steps a), b) and optionally c) until the part (P) is produced,
wherein step b) of detecting at least one missing material defect includes the step consisting in scanning said at least one layer, deposited in step a), in order to acquire topographical data about said at least one layer, and the step consisting in processing the data acquired in order to detect and geolocate at least one missing material defect, if one or more defects of this type are present on said at least one layer, the scanning step being implemented by a profilometer, in particular a laser profilometer, the profilometer being positioned outside the enclosure, scanning step b) being implemented by the profilometer through a wall portion transparent to the wavelength of the profilometer, in the visible range, between 380 nm and 800 nm, the transparent wall portion forming at least part of a wall defining the enclosure.

2. Method according to Claim 1, wherein step a) of depositing said at least one layer of material is performed using a nozzle (5) fastened to a carriage (6), said carriage (6) being movable along at least two axes (X, Y), preferably three orthogonal axes (X, Y, Z), relative to the support (2).

3. Method according to one of the two immediately preceding claims, wherein the material added in step c) is different from the material deposited for each layer in step a), preferably being more fluid.

4. Method according to Claim 2, wherein step c) of repairing said at least one missing material defect is carried out by the nozzle (5).

5. Method according to Claim 2, wherein step c) of repairing said at least one missing material defect is carried out by a second nozzle (16).

6. Method according to the preceding claim, wherein the second nozzle (16) has a smaller diameter than that of the nozzle (5).

7. Method according to any one of the preceding claims, wherein the material used for additive manufacturing and/or the material added in the repair step c) is a thermoplastic polymer selected from the group consisting of PAEKs (polyaryletherketone), including PEEK (polyetheretherketone) and PEKK (polyetherketoneketone), PEIs (polyetherimide, also known as ULTEM), PPS (polyphenylene sulfide), ABS (acrylonitrile butadiene styrene), PA (polyamide), PP (polypropylene), PLA (polylactic acid), TPU (thermoplastic polyurethane) and PET (polyethylene).

8. Method according to any one of the preceding claims, wherein step a) is carried out by depositing extruded polymer filament.

9. Additive manufacturing machine (1) for implementing the method according to any one of the preceding claims, the additive manufacturing being material extrusion printing, the machine including:
- a support (2) for the part (P) to be manufactured,
- at least one spool (3) of polymer material filament (4),
- at least one nozzle (5) for extruding and depositing the filament (4) in order to form the part (P),
- a carriage (6) to which the nozzle (5) and optionally a second nozzle (16) is/are fastened,
- at least one of the carriage (6) and the support (2) being movable along at least two axes (X, Y), in particular three axes (X, Y, Z), relative to the other, said at least one nozzle (5) being used for repairing missing material defects or the machine (1) including a second nozzle (16) for repairing missing material defects, the second nozzle (16) preferably having a smaller diameter than that of the nozzle (5),
- a scanning tool, the scanning tool being a profilometer, in particular an optical profilometer,
- an enclosure (11), the support being in the enclosure (11), the scanning tool being outside the enclosure (11), the nozzle (5), and the optional second nozzle (16), emerging into the enclosure (11), a part of a wall of the enclosure being transparent to the wavelength of the profilometer and being positioned so as to allow the profilometer to scan at least a part of the part through this wall.
